# EUROPEAN PATENT APPLICATION

(11) **EP 4 120 060 A1**
(43) Date of publication of application: **18.01.2023**
(21) Application number: 22204098.2
(22) Date of filing: 27.10.2022
(51) Int. Cl.: G06F 3/06

(54) **METHOD AND APPARATUS OF STORING DATA,AND METHOD AND APPARATUS OF READING DATA**

(30) Priority: 27.10.2021 CN 202111259196
(71) Applicant: Beijing Baidu Netcom Science Technology Co., Ltd., Beijing 100085 (CN)
(72) Inventor: Chen, Cheng, Beijing, 100085 (CN)
(74) Representative: Hoffmann Eitle

(57) **Abstract**

The present disclosure provides a method and an apparatus of storing data, a method and an apparatus of reading data, a device, a storage medium, and a program product, which relate to a field of artificial intelligence, in particular to the fields of cloud computing technology and distributed storage technology. The specific implementation scheme includes: storing at least one target data into a target file in a storage class memory device; recording a storage address of the at least one target data in the storage class memory device in a dynamic random access memory as a first index data; and synchronously storing the first index data into the storage class memory device as a second index data.

## Description

### TECHNICAL FIELD

The present disclosure relates to a field of artificial intelligence, in particular to the fields of cloud computing technology and distributed storage technology.

### BACKGROUND

With the development of cloud computing, an amount of data processed by cloud server is increasing, and a distributed block storage system arises at a historic moment. The distributed block storage system may provide cloud server with low latency, high persistence, high reliability and high elasticity block storage services.

### SUMMARY

The present disclosure provides a method and an apparatus of storing data, a method and an apparatus of reading data, a device, a storage medium and a program product.

According to one aspect of the present disclosure, there is provided a method of storing data, including: storing at least one target data into a target file in a storage class memory device; recording a storage address of the at least one target data in the storage class memory device in a dynamic random access memory as a first index data; and synchronously storing the first index data into the storage class memory device as a second index data.

According to another aspect of the present disclosure, there is provided a method of reading data, including: obtaining a data reading request; in a case that a first index data exists in a dynamic random access memory, determining a storage address of a target data corresponding to the data reading request according to the first index data; in a case that the first index data does not exist in the dynamic random access memory, determining the storage address of the target data corresponding to the data reading request according to a second index data in a storage class memory device; and reading the target data according to the storage address.

According to one aspect of the present disclosure, there is provided an apparatus of storing data, including: a first storage module configured to store at least one target data into a target file in a storage class memory device; a first recording module configured to record a storage address of the at least one target data in the storage class memory device in a dynamic random access memory as a first index data; and a second recording module configured to synchronously store the first index data into the storage class memory device as a second index data.

According to one aspect of the present disclosure, there is provided an apparatus of reading data, including: an obtaining module configured to obtain a data reading request; a first determining module configured to determine, in a case that a first index data exists in a dynamic random access memory, a storage address of a target data corresponding to the data reading request according to the first index data; a second determining module configured to determine, in a case that the first index data does not exist in the dynamic random access memory, the storage address of the target data corresponding to the data reading request according to a second index data in a storage class memory device; and a reading module configured to read the target data according to the storage address.

According to another aspect of the present disclosure, there is provided an electronic device, including: at least one processor; and a memory communicatively coupled with the at least one processor; wherein the memory stores instructions executable by the at least one processor, and the instructions, when executed by the at least one processor, cause the at least one processor to implement the method of the embodiments of the present disclosure.

According to another aspect of the embodiments of the present disclosure, there is provided a non-transitory computer readable storage medium storing computer instructions, wherein the computer instructions are configured to cause a computer to implemet the method of the embodiments of the present disclosure.

According to another aspect of the embodiments of the present disclosure, there is provided a computer program product, including a computer program or instructions, and the computer program or the instructions, when executed by a processer, implements or implement the method shown in the embodiments of the present disclosure.

It should be understood that the content described in this part is not intended to identify key or important features of the embodiments of the present disclosure, nor is it intended to limit the scope of the present disclosure. Other features of the present disclosure will be readily understood through the following description.

### BRIEF DESCRIPTION OF THE DRAWINGS

The accompanying drawings are used for better understanding of the solution and do not constitute a limitation to the present disclosure, in which:
FIG. 1 is a schematic diagram of an application scenario of a method and an apparatus of storing data, a method and an apparatus of reading data, an electronic device, and a storage medium according to an embodiment of the present disclosure;
FIG. 2 schematically shows a flowchart of a method of storing data according to an embodiment of the present disclosure;
FIG. 3 schematically shows a flowchart of a method of storing data according to another embodiment of the present disclosure;
FIG. 4 schematically shows a flowchart of a method of reading data according to an embodiment of the present disclosure;
FIG. 5 schematically shows a block diagram of an apparatus of storing data according to an embodiment of the present disclosure;
FIG. 6 schematically shows a block diagram of an apparatus of reading data according to an embodiment of the present disclosure; and
FIG. 7 schematically shows a block diagram of an electronic device that may be used to implement an exemplary embodiment of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

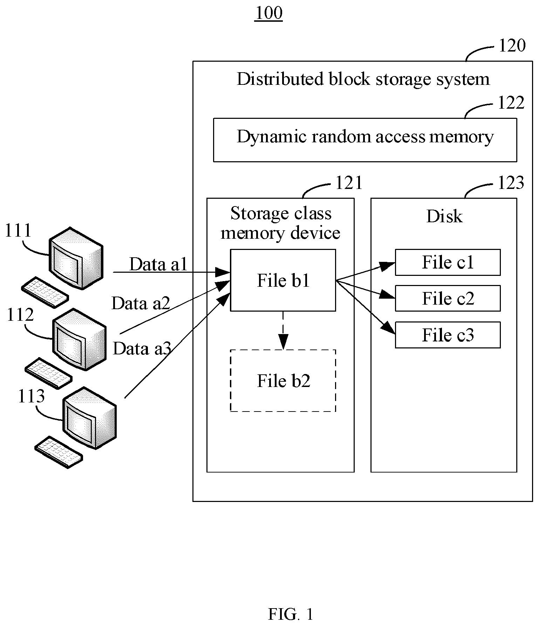

The application scenario of the method and the apparatus provided by the present disclosure will be described below with reference to FIG. 1.

FIG. 1 is a schematic diagram of an application scenario of a method and an apparatus of storing data, a method and an apparatus of reading data, an electronic device, and a storage medium according to an embodiment of the present disclosure.

As shown in FIG. 1, the application scenario 100 includes a plurality of terminal devices 111, 112, 113 and a distributed block storage system 120.

According to the embodiments of the present disclosure, the terminal devices 111, 112, 113 may be various electronic devices that support network communication, including but not limited to a smart phone, a tablet, a laptop computer, a desktop computer, a server, and the like. Users may use the terminal devices 111, 112, 113 to interact with the distributed block storage system 120 through a network to store or read data, etc.

According to the embodiments of the present disclosure, the distributed block storage system 120 may include a storage class memory device 121, a dynamic random access memory 122, and a disk 123.

According to the embodiments of the present disclosure, the storage class memory device 121 may include, for example, an AEP (Apach Pass) device. AEP device is a SCM (Storage Class Memory) designed for high performance and flexibility. Its particle is 3D Xpoint. Compared with DRAM, data in the AEP device may not be lost in case of power failure. Compared with SSD (Solid State Disk) based on NAND flash, AEP device may not only read and write faster, but also perform a byte-level access.

According to the embodiments of the present disclosure, the dynamic random access memory 122 may serve as a temporary data storage medium for an operating system or other running programs, for example. The data in the dynamic random access memory 122 may disappear after the power is cut off.

According to the embodiments of the present disclosure, the disk 123 may be used for long-term storage of data, for example, including a hard disk, a SSD, and the like. Data in the disk 123 may not disappear after the power is cut off.

According to the embodiments of the present disclosure, the user may send a data storage request to the distributed block storage system 120 through the terminal devices 111, 112, 113. After receiving the data storage request, the distributed block storage system 120 may store a target data for the data storage request into a target file in the storage class memory device 121. Then, a storage address of the target data in the storage class memory device 121 is recorded in the dynamic random access memory 122 as a first index data. The first index data is synchronously stored in the storage class memory device 121 as a second index data.

For example, a file b1 may be allocated to the storage class memory device 121 in advance to store the data sent by the terminal devices 111, 112, 113. In this embodiment, the terminal devices 111, 112 and 113 may respectively send data a1, data a2 and data a3 to the distributed block storage system 120. The distributed block storage system 120 may store data a1, data a2, and data a3 into the pre-allocated file b1 in the storage class memory device 121. For example, in this embodiment, when it is determined that the file b1 is full of data, a new file, such as file b2, may be allocated to store subsequent data.

According to the embodiments of the present disclosure, by using the storage class memory device 121 to store the target data, a low latency of the storage class memory device 121 may be used to improve a read and write performance of the distributed block storage system 120.

According to the embodiments of the present disclosure, the user may also send a data reading request to the distributed block storage system 120 through the terminal devices 111, 112, 113. After receiving the data reading request, the distributed block storage system 120 may query whether the first index data exists in the dynamic random access memory 122. When the first index data exists in the dynamic random access memory 122, the storage address of the target data corresponding to the data reading request is determined according to the first index data, and then the target data is read according to the storage address. When the first index data does not exist in the dynamic random access memory 122, the storage address of the target data corresponding to the data reading request is determined according to the second index data in the storage class memory device 121, and then the target data is read according to the storage address.

According to the embodiments of the present disclosure, the index data is stored respectively into the dynamic random access memory 122 and the storage class memory device 121. When the dynamic random access memory is normal, the index data in the dynamic random access memory 122 may be read for data indexing, which is faster. When the data in the dynamic random access memory 122 is lost, the index data in the storage class memory device 121 may be read for data indexing. By taking advantage of a persistence characteristic of the storage class memory device 121, a data reliability of the distributed block storage system 120 may be improved.

According to the embodiments of the present disclosure, some or all of the data in the storage class memory device 121 may also be transferred to the disk 123 for storage. Based on this, the target data in the target file may also be transferred to the disk 123 according to a predetermined cycle and a predetermined data granularity. The storage address of the target data in the disk 123 is recorded in the first index data, and the second index data is updated according to the first index data. The predetermined period and the predetermined data granularity may be set according to actual needs.

For example, data a1, a2, and a3 in the file b1 may be transferred to the disk 123 according to an hourly cycle and a byte-level granularity. For example, in this embodiment, data a1 in the file b1 may be stored in a file c1 on the disk 123, data a2 in the file b1 may be stored in a file c2 on the disk 123, and data a3 in the file b1 may be stored in a file c3 on the disk 123.

According to the embodiments of the present disclosure, after the data in the storage class memory device 121 is transferred to the disk 123, the file b1 may further be deleted, thereby saving a space of the storage class memory device 121.

Collecting, storing, using, processing, transmitting, providing, disclosing and applying etc. of personal information of the user involved in the present disclosure all comply with the relevant laws and regulations, take essential confidentiality measures, and do not violate the public order and morals. In the technical solution of the present disclosure, authorization or consent is obtained from the user before the user's personal information is obtained or collected.

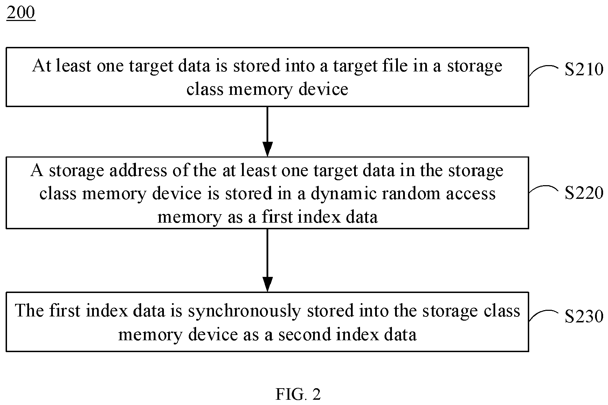

FIG. 2 schematically shows a flowchart of a method of storing data according to an embodiment of the present disclosure.

As shown in FIG. 2, the method 200 includes operations S210 to S230. In operation S210, at least one target data is stored into a target file in a storage class memory device.

Then, in operation S220, a storage address of the at least one target data in the storage class memory device is recorded in a dynamic random access memory as a first index data.

In operation S230, the first index data is synchronously stored into the storage class memory device as a second index data.

According to the embodiments of the present disclosure, the target data may include, for example, data requested to be stored by the user. For example, the target file may be a pre-allocated file in the storage class memory device, which is used to store the data that the user requests to store.

According to the embodiments of the present disclosure, a file with a predetermined size may be allocated in the storage class memory device as the target file. When it is determined that the target file is full of data, a file with the predetermined size is reallocated as a new target file.

According to the embodiments of the present disclosure, an original offset of the target file may be obtained. The original offset may be used to indicate a starting position for writing a currently data into the target file. For example, if no data has been written into the target file, the original offset may be a file start position of the target file. If data has been written into the target file, the original offset may be an end position of a last written data. Next, a file offset corresponding to each target data of the at least one target data may be determined according to the original offset. Then, the at least one target data is written to the target file according to the file offset corresponding to each target data.

According to the embodiments of the present disclosure, the storage address of each target data is recorded in the first index data and the second index data. When reading data, the storage address of the data to be read may be determined according to the first index data or the second index data, and then the data stored in the storage address may be read. For example, in this embodiment, since the dynamic random access memory has a faster reading speed, the first index data in the dynamic random access memory may be preferentially used when reading data, and the second index data may be used when the first index data does not exist in the dynamic random access memory. Thus, a data reliability of index data may be improved while the reading performance is improved.

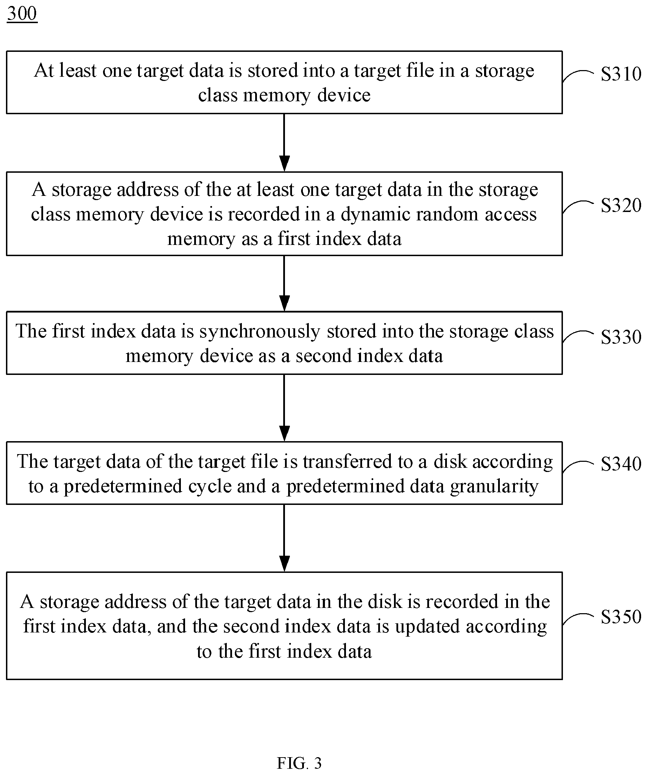

FIG. 3 schematically shows a flowchart of a method of storing data according to another embodiment of the present disclosure.

As shown in FIG. 3, the method 300 includes operations S310 to S350. In operation S310, at least one target data is stored into a target file in a storage class memory device.

Then, in operation S320, a storage address of the at least one target data in the storage class memory device is recorded in a dynamic random access memory as a first index data.

In operation S330, the first index data is synchronously stored into the storage class memory device as a second index data.

In operation S340, the target data of the target file is transferred to a disk according to a predetermined cycle and a predetermined data granularity.

In operation S350, a storage address of the target data in the disk is recorded in the first index data, and the second index data is updated according to the first index data.

According to the embodiments of the present disclosure, the predetermined period and the predetermined data granularity may be set according to actual needs. For example, in this embodiment, the predetermined period may be set to once per hour, and the predetermined data may, for example, be at a granularity of one byte.

According to the embodiments of the present disclosure, the target file may further be deleted when it is determined that all of the target data in the target file is transferred to the disk, thereby saving a space of the storage class memory device.

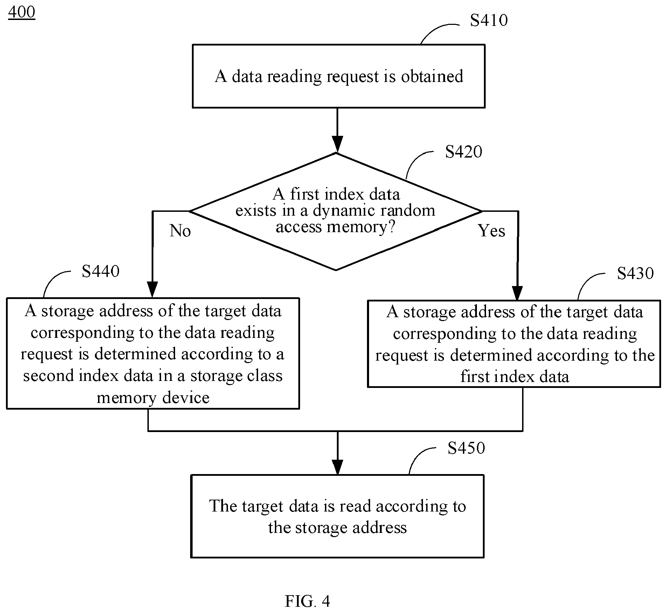

FIG. 4 schematically shows a flowchart of a method of reading data according to an embodiment of the present disclosure.

As shown in FIG. 4, the method 400 includes operations S410 to S450. In operation S410, a data reading request is obtained.

Then, in operation S420, it is determined whether a first index data exists in a dynamic random access memory. When the first index data exists in the dynamic random access memory, operation S430 is performed. When the first index data does not exist in the dynamic random access memory, operation S440 is performed.

In operation S430, a storage address of a target data corresponding to the data reading request is determined according to the first index data. Then operation S450 is performed.

In operation S440, the storage address of the target data corresponding to the data reading request is determined according to a second index data in a storage class memory device. Then operation S450 is performed.

In operation S450, the target data is read according to the storage address.

According to the embodiments of the present disclosure, when the first index data exists in the dynamic random access memory, the first index data in the dynamic random access memory is used to determine the storage address of the target data corresponding to the data reading request. Because of the high reading speed of the dynamic random access memory, the reading performance may be improved.

In addition, the dynamic random access memory may lose data when, for example, a power failure occurs. Therefore, in this embodiment, when the first index data does not exist in the dynamic random access memory, the second index data is used to determine the storage address of the target data corresponding to the data reading request, so that data may also be normally indexed even if the first index data is lost in the dynamic random access memory, so as to improve a data reliability of index data.

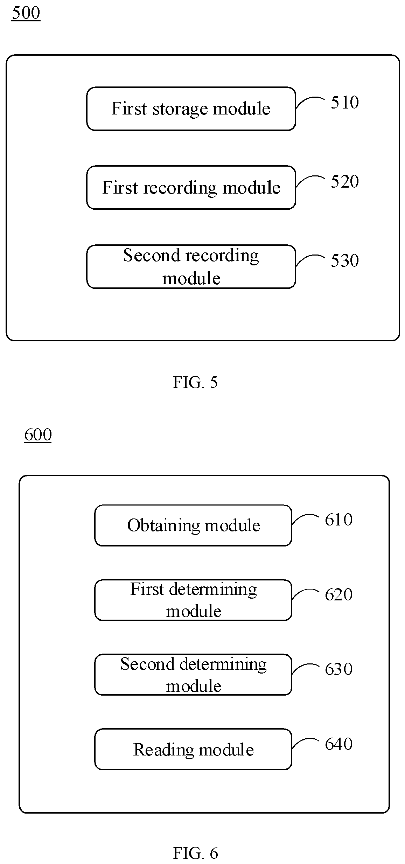

FIG. 5 schematically shows a block diagram of an apparatus of storing data according to an embodiment of the present disclosure.

As shown in FIG. 5, the apparatus 500 includes a first storage module 510, a first recording module 520, and a second recording module 530.

The first storage module 510 is used to store at least one target data into a target file in a storage class memory device.

The first recording module 520 is used to record a storage address of the at least one target data in the storage class memory device in a dynamic random access memory as a first index data.

The second recording module 530 is used to synchronously store the first index data into the storage class memory device as a second index data.

FIG. 6 schematically shows a block diagram of an apparatus of reading data according to an embodiment of the present disclosure.

As shown in FIG. 6, the apparatus 600 includes an obtaining module 610, a first determining module 620, a second determining module 630, and a reading module 640.

The obtaining module 610 is used to obtain a data reading request.

The first determining module 620 is used to determine a storage address of a target data corresponding to the data reading request according to a first index data when the first index data exists in a dynamic random access memory.

The second determining module 630 is used to determine the storage address of the target data corresponding to the data reading request according to a second index data in a storage class memory device when the first index data does not exist in the dynamic random access memory.

The reading module 640 is used to read the target data according to the storage address.

According to the embodiments of the present disclosure, the present disclosure further provides an electronic device, a readable storage medium, and a computer program product.

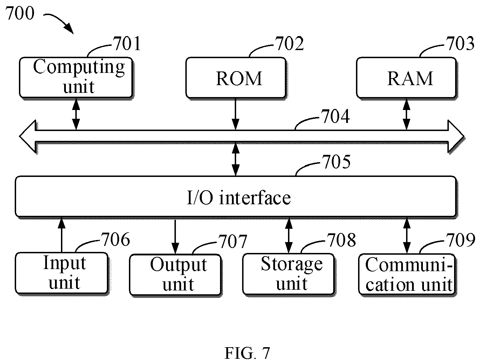

FIG. 7 shows a schematic block diagram of an example electronic device 700 that may be used to implement the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 7, the electronic device 700 may include computing unit 701, which may perform various appropriate actions and processing based on a computer program stored in a read-only memory (ROM) 702 or a computer program loaded from a storage unit 708 into a random access memory (RAM) 703. Various programs and data required for the operation of the electronic device 700 may be stored in the RAM 703. The computing unit 701, the ROM 702 and the RAM 703 are connected to each other through a bus 704. An input/output (I/O) interface 705 is further connected to the bus 704.

Various components in the electronic device 700 are connected with I/O interface 705, including an input unit 706, such as a keyboard, a mouse, etc.; an output unit 707, such as various types of displays, speakers, etc.; a storage unit 708, such as a magnetic disk, an optical disk, etc.; and a communication unit 709, such as a network card, a modem, a wireless communication transceiver, etc.. The communication unit 709 allows the electronic device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 701 may perform the various methods and processes described above, such as the method of storing data and the method of reading data. For example, in some embodiments, the method of storing data and the method of reading data may be implemented as a computer software program that is tangibly contained on a machine-readable medium, such as a storage unit 708. In some embodiments, part or all of a computer program may be loaded and/or installed on the electronic device 700 via the ROM 702 and/or the communication unit 709. When the computer program is loaded into the RAM 703 and executed by the computing unit 701, one or more steps of the method of storing data and the method of reading data described above may be performed. Alternatively, in other embodiments, the computing unit 701 may be configured to perform the method of storing data and the method of reading data in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server for distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of storing data, comprising:
storing (S210, S310) at least one target data (a1, a2, a3) into a target file (b1) in a storage class memory device (121);
recording (S220, S320) a storage address of the at least one target data (a1, a2, a3) in the storage class memory device (121) in a dynamic random access memory (122), as a first index data; and
synchronously storing (S230, S330) the first index data into the storage class memory device (121) as a second index data.

2. The method of claim 1, wherein the storing (S210, S310) at least one target data (a1, a2, a3) into a target file (b1) in a storage class memory device (121) comprises:
obtaining an original offset of the target file (b1);
determining a file offset corresponding to each target data of the at least one target data (a1, a2, a3) according to the original offset; and
writing the at least one target data (a1, a2, a3) to the target file (b1) according to the file offset corresponding to each target data (a1, a2, a3).

3. The method of claim 1 or 2, further comprising:
allocating a file with a predetermined size in the storage class memory device (121) as the target file (b1); and
reallocating a file with the predetermined size as a new target file (b2) in response to determining the target file (b1) is full of data.

4. The method of any one of claims 1 to 3, further comprising:
transferring (S340) the target data (a1, a2, a3) of the target file (b1) to a disk (123) according to a predetermined cycle and a predetermined data granularity; and
recording (S350) a storage address of the target data (a1, a2, a3) in the disk (123) in the first index data, and updating the second index data according to the first index data.

5. The method of claim 4, further comprising:
deleting the target file (b1) in response to determining all the target data (a1, a2, a3) of the target file (b1) is transferred to the disk (123).

6. A method of reading data, comprising:
obtaining (S410) a data reading request;
in a case that a first index data exists in a dynamic random access memory (122), determining (S430) a storage address of a target data corresponding to the data reading request according to the first index data;
in a case that the first index data does not exist in the dynamic random access memory (122), determining (S440) the storage address of the target data corresponding to the data reading request according to a second index data in a storage class memory device (121); and
reading (S450) the target data according to the storage address.

7. An apparatus of storing data, comprising:
a first storage module (510) configured to store at least one target data into a target file in a storage class memory device;
a first recording module (520) configured to record a storage address of the at least one target data in the storage class memory device in a dynamic random access memory as a first index data; and
a second recording module (530) configured to synchronously store the first index data into the storage class memory device as a second index data.

8. The apparatus of claim 7, wherein the first storage module (510) comprises:
an obtaining sub-module configured to obtain an original offset of the target file;
a determining sub-module configured to determine a file offset corresponding to each target data of the at least one target data according to the original offset; and
a writing sub-module configured to write the at least one target data to the target file according to the file offset corresponding to each target data.

9. The apparatus of claim 7 or 8, further comprising:
a first allocation module configured to allocate a file with a predetermined size in the storage class memory device as the target file; and
a second allocation module configured to reallocate a file with the predetermined size as a new target file in response to determining the target file is full of data.

10. The apparatus of any one of claims 7 to 9, further comprising:
a transferring module configured to transfer the target data of the target file to a disk according to a predetermined cycle and a predetermined data granularity; and
a third recording module configured to record a storage address of the target data in the disk in the first index data and the second index data.

11. The apparatus of claim 10, further comprising:
a deletion module configured to delete the target file in response to determining all the target data of the target file is transferred to the disk.

12. An apparatus of reading data, comprising:
an obtaining module (610) configured to obtain a data reading request;
a first determining module (620) configured to determine, in a case that a first index data exists in a dynamic random access memory, a storage address of a target data corresponding to the data reading request according to the first index data;
a second determining module (630) configured to determine, in a case that the first index data does not exist in the dynamic random access memory, the storage address of the target data corresponding to the data reading request according to a second index data in a storage class memory device; and
a reading module (640) configured to read the target data according to the storage address.

13. An electronic device (700), comprising:
at least one processor; and
a memory communicatively coupled with the at least one processor;
wherein the memory stores instructions executable by the at least one processor, and the instructions, when executed by the at least one processor, cause the at least one processor to implement the method of any one of claims 1 to 6.

14. A non-transitory computer readable storage medium storing computer instructions, wherein the computer instructions are configured to cause a computer to implement the method of any one of claims 1 to 6.

15. A computer program product comprising a computer program or instructions, wherein the computer program or the instructions, when executed by a processer, implements or implement the method of any one of claims 1 to 6.
